# EUROPÄISCHE PATENTSCHRIFT

(11) **EP 3 899 860 B1**
(45) Veröffentlichungstag und Bekanntmachung des Hinweises auf die Patenterteilung: **30.04.2025**
(21) Anmeldenummer: 19818064.8
(22) Anmeldetag: 11.12.2019
(51) Int. Cl.: G06T 3/4046, G06T 3/4053

(54) **GRÖSSENVERÄNDERUNG VON BILDERN MITTELS EINES NEURONALEN NETZES**
IMAGE RESCALING BY A NEURAL NETWORK
REDIMENSIONNEMENT D'IMAGES AU MOYEN D'UN RÉSEAU DE NEURONES

(30) Priorität: 19.12.2018 DE 102018222300
(43) Veröffentlichungstag der Anmeldung: 27.10.2021
(73) Patentinhaber: Leica Microsystems CMS GmbH, 35578 Wetzlar (DE)
(72) Erfinder: KAPPEL, Constantin, 69198 Schriesheim (DE)
(74) Vertreter: Grünecker Patent- und Rechtsanwälte PartG mbB
(86) Internationale Anmeldenummer: PCT/EP2019/084550
(87) Internationale Veröffentlichungsnummer: WO 2020/126719

(56) Entgegenhaltungen:
- US-A1- 2018 342 044
- YAIR RIVENSON ET AL: "Toward a Thinking Microscope: Deep Learning in Optical Microscopy and Image Reconstruction", ARXIV.ORG, CORNELL UNIVERSITY LIBRARY, 201 OLIN LIBRARY CORNELL UNIVERSITY ITHACA, NY 14853, 23 May 2018 (2018-05-23), XP081139811, DOI: 10.1364/OPN.29.7.000034
- YAIR RIVENSON ET AL: "Deep Learning Microscopy", ARXIV.ORG, CORNELL UNIVERSITY LIBRARY, 201 OLIN LIBRARY CORNELL UNIVERSITY ITHACA, NY 14853, 12 May 2017 (2017-05-12), XP081276423, DOI: 10.1364/OPTICA.4.001437
- YAIR RIVENSON ET AL: "Deep learning enhanced mobile-phone microscopy", ARXIV.ORG, CORNELL UNIVERSITY LIBRARY, 201 OLIN LIBRARY CORNELL UNIVERSITY ITHACA, NY 14853, 12 December 2017 (2017-12-12), XP081303226, DOI: 10.1021/ACSPHOTONICS.8B00146

## Beschreibung

Die Erfindung betrifft ein Verfahren und eine Vorrichtung zur Bereitstellung von einem neuronalen Netz zur Skalierung von Bildern.

Bei der Bildaufnahme eines Bilderfassungssystems, wie zum Beispiel einer Digitalkamera, kann ein digitales Bild mit einer bestimmten Auflösung oder Pixelauflösung entstehen. Das digitale Bild kann als eine Anzahl von Spalten (Breite) und Zeilen (Höhe) einer Rastergrafik aufgefasst werden. Der Informationsgehalt in Bildern ist durch die Auflösung oder die Gesamtzahl der Bildpunkte eines Bildes begrenzt. Für bestimmte Anwendungszwecke kann es vorteilhaft sein die Größe eines Bildes anzupassen oder zu ändern.

Bestehende Systeme skalieren Bilder oder ändern die Größe eines Bildes mit Hilfe von Interpolation. Wenn digitale Bilder vergrößert werden, müssen Werte für die Bildhelligkeit neuer Pixel berechnet werden, die zwischen bestehenden Pixeln liegen. Bei der Interpolation werden dazu die bestehenden Pixel als Randwerte verwendet und nach einer festgelegten mathematischen Funktion die Zwischenwerte im Pixelraster berechnet. Bekannte mathematische Verfahren sind die bilineare, biquadratische oder bikubische Interpolation. All diese Verfahren zur Berechnung neuer Zwischenwerte verwenden allerdings nur Bildinformation aus dem einen vorliegenden Bild. Das dadurch entstehende Bild vergrößert zwar alle Bildelemente und Objekte im Bild proportional korrekt, gibt aber keine neuen Bilddetails wieder. Dadurch werden keine neuen Bilddetails sichtbar, die bei einer höher auflösenden Aufnahme eines Objektes sichtbar werden könnten. Daher wirkt bei Verfahren die mit Interpolation arbeiten der entstehende Bildeindruck verwaschen.

Um dieses Problem zu umgehen, verwenden neuere Methoden aus dem Stand der Technik Verfahren, die auf internen Bildähnlichkeiten, wie beispielsweise von Freedman, G., und Fattal, R. in der Zeitschrift ACM Transactions on Graphics (TOG) Volume 30 Issue 2, (April 2011) "Image and Video Upscaling from Local Self-Examples*"* beschrieben, oder Ähnlichkeiten mit Bildelementen externer Bildpaare aus niedrig und hoch aufgelösten Bildern, wie beispielsweise von D. Dai, R. Timofte, und L. Van Gool in Computer Graphics Forum, Volume 34, Seiten 95-104 (2015) "Jointly Optimized Regressors for Image Super-resolution*"* beschrieben, basieren, um Bilder hoch zu skalieren.

Diese Verfahren aus dem Stand der Technik weisen einige Nachteile und Probleme auf, die im Folgenden betrachtet werden sollen. Zum Beispiel sind diese Verfahren häufig domänenspezifisch und die Skalierung lässt sich nicht ohne weiteres auf neue Anwendungsfelder mit bisher unbekannten Objekten in Bildern übertragen. Außerdem verwenden bestehende Mikroskope oder Bilderfassungssysteme Verfahren zur Hochskalierung von Bildern nur als Mittel zur Bildnachbearbeitung. Dadurch ist die Verwendbarkeit der hochskalierten Bilder eingeschränkt. Des Weiteren können mit Verfahren aus dem Stand der Technik selten Skalierungsfaktoren größer als 2.0 realisiert werden.

VAIR RIVENSON ET AL: "Toward a Thinking Microscope: Deep Learning in Optical Microscopy and Image Reconstruction", CORNELL UNIVERSITY LIBRARY, 201 OLIN LIBRARY CORNELL UNIVERSITY ITHACA, NY 14853, zeigt ein Deep-Learning-Verfahren und dessen Anwendung für die optische Mikroskopie und mikroskopische Bildrekonstruktion.

VAIR RIVENSON ET AL: "Deep Learning Microscopy", CORNELL UNIVERSITY LIBRARY, 201 OLIN LIBRARY CORNELL UNIVERSITY ITHACA, NY 14853, offenbart ein tiefes neuronales Netzwerk für die optische Mikroskopie, um die räumliche Auflösung über einen großen Sichtbereich und die Tiefenschärfe zu verbessern.

YAIR RIVENSON ET AL: "Deep learning enhanced mobile-phone microscopy", CORNELL UNIVERSITY LIBRARY, 201 OLIN LIBRARY CORNELL UNIVERSITY ITHACA, NY 14853, offenbart die Verwendung von Deep Leaming zur Korrektur von Verzerrungen, die durch Mikroskope auf Mobiltelefonbasis verursacht werden, zur Erzeugung hochauflösender, entrauschter und farbkorrigierter Bilder.

US 2018/342044 A1 offenbart eine Vorrichtung, die erste Bilddaten mit einer ersten Auflösung und zweite Bilddaten mit einer Auflösung, die kleiner als die erste Auflösung ist, empfängt. Die zweiten Bilddaten können auf die erste Auflösung skaliert und mit den ersten Bilddaten verglichen werden. Die Anwendung eines neuronalen Netzwerks kann die ersten Bilddaten auf eine Auflösung skalieren, die höher als die erste Auflösung ist.

Aufgabe der vorliegenden Erfindung ist es somit, verbesserte Mittel zur Skalierung von Bildern bereitzustellen.

Die vorliegende Erfindung ergibt sich aus den beigefügten Ansprüchen und löst die angesprochenen Probleme und die Aufgabe durch eine Vorrichtung zur Skalierung von Bildern. Die erfindungsgemäße Vorrichtung umfasst ein oder mehrere Prozessoren und ein oder mehrere computerlesbare Speichermedien, wobei auf den ein oder mehreren computerlesbaren Speichermedien computerausführbare Anweisungen gespeichert sind, die, wenn sie von dem einen oder den mehreren Prozessoren ausgeführt werden, bewirken, dass ein oder mehrere erste Bilder mittels eines Abbildungs- und/oder Bildaufzeichnungssystems erfasst werden und ein neuronales Netz in Abhängigkeit der ein oder mehreren erfassten ersten Bilder ein oder mehrere entsprechende zweite Bilder erzeugt. Die ein oder mehreren erfassten ersten Bildern hängen mit einer ersten Auflösung zusammen und die ein oder mehreren zweiten Bilder hängen mit einer zweiten Auflösung zusammen, die sich von der ersten Auflösung unterscheidet.

Das erfindungsgemäße Verfahren umfasst die Schritte des Bestimmens von einer Vielzahl von Bilderpaaren, und des Trainierens eines neuronalen Netzes in Abhängigkeit der bestimmten Vielzahl von Bilderpaaren derart, dass das trainierte neuronale Netz angewendet auf ein erstes Bild ein zweites Bild ausgibt, wobei sich die Auflösung des ersten Bildes von der Auflösung des zweiten Bildes unterscheidet, wobei Eingabebilder der Vielzahl von Bilderpaaren mit einem ersten Abbildungs- und/oder Bildaufzeichnungssystem und den Eingabebildern entsprechende Soll-Ausgabebilder der Bilderpaare mit einem zweiten Abbildungs- und/oder Bildaufzeichnungssystem erfasst wurden, und wobei sich das erste Abbildungs- und/oder Bildaufzeichnungssystem von dem zweiten Abbildungs- und/oder Bildaufzeichnungssystem unterscheidet.

Das erfindungsgemäße Verfahren und die erfindungsgemäße Vorrichtung haben den Vorteil, dass mittels der verwandten neuronalen Netze, z. B. im Sinne von Deep Learning, eine intelligente Skalierung von digitalen Bildern in Echtzeit oder nahe Echtzeit während der Aufnahme von Bildern ermöglicht wird. Des Weiteren ermöglichen das erfindungsgemäße Verfahren und die erfindungsgemäße Vorrichtung, dass eine Pixelauflösung eines erfassten Bildes vergrößert wird. Die fehlende Bildinformation kann von einem mit einer Vielzahl von Bildern, beispielsweise mit vielen tausenden oder gar Millionen von Bildern, vortrainierten neuronalen Netz erzeugt werden. Die fehlende Bildinformation wird also nicht einfach aus dem einen vorliegenden Bild interpoliert, sondern aufgrund einer gelernten Bildsemantik erzeugt.

Durch die Verwendung von einem neuronalen Netz wird ein Bild erzeugt, das mehr Bilddetails und/oder mehr Bildinformation enthält als das ursprünglich aufgenommene Bild. Somit ist das mittels neuronalem Netz erzeugte Bild detailreicher als das ursprünglich aufgenommene. Dies kann die Interpretation des Bildes durch einen Menschen oder einen Algorithmus erleichtern. Außerdem ermöglichen neuronale Netze eine bessere Generalisierbarkeit für bisher nicht gekannte Anwendungen.

Das erfindungsgemäße Verfahren und die erfindungsgemäße Vorrichtung können jeweils durch spezifische Ausgestaltungen weiter verbessert werden. Einzelne technische Merkmale der nachfolgend beschriebenen Ausgestaltungen der Erfindung können dabei beliebig miteinander kombiniert und/oder weggelassen werden, sofern es nicht auf den mit dem weggelassenen technischen Merkmal erzielten technischen Effekt ankommt.

In einer Ausführungsform ist die erfindungsgemäße Vorrichtung ausgestaltet das neuronale Netz direkt auf jedes der ein oder mehreren erfassten ersten Bilder anzuwenden und nur die ein oder mehreren zweiten Bilder abzuspeichern. Durch ein Reduzieren der ersten Auflösung der ein oder mehreren erfassten ersten Bilder vor dem Speichern, kann Speicherplatz gespart werden. Alternativ können die ein oder mehreren ersten Bilder, die mit einem Bilderfassungssystem, wie beispielsweise mit einem Mikroskop mit einer Kamera, einer Videokamera, einem Mikroskopsystem, einem Mikroskop mit einem Punktscanner, einer Digitalkamera, einem Smartphone, einem Teleskop, einem Messgerät oder einem Computer mit Kamera erfasst wurden, abgespeichert werden und das neuronale Netz auf die ein oder mehreren abgespeicherten ersten Bilder angewendet werden. Neuronale Netze haben den Vorteil, dass Bilder die in das neuronale Netz eingegeben werden, dieses nur einmal durchlaufen. Es muss kein Optimierungsproblem gelöst werden um ein hochskaliertes Bild zu erzeugen. Somit kann aus den mit niedriger Auflösung abgespeicherten Bildern das höher aufgelöste Bild schnell und effizient errechnet werden.

In Ausführungsformen können die ein oder mehreren Prozessoren Rechenbeschleuniger, wie Graphical Processing Units (GPUs), Field Programmable Gated Arrays (FPGAs), TensorFlow Processing Units oder Tensor Processing Units (TPUs), auf Machine Learning (ML)- und/oder Deep Learning (DL)- spezialisierte Application Specific Integrated Circuits (ASICs) oder mindestens eine Central Processing Unit (CPU) umfassen. Dadurch können Bilder schnell verarbeitet werden und die Bildskalierung kann ein Teil des Bildaufnahmeprozesses sein.

Die erfindungsgemäße Vorrichtung kann des Weiteren dadurch vorteilhaft ausgestaltet sein, dass die computerausführbaren Anweisungen, wenn sie von dem einen oder den mehreren Prozessoren ausgeführt werden, des Weiteren bewirken, dass das Abbildungs- und/oder Bildaufzeichnungssystem in Abhängigkeit von der ersten Auflösung eingestellt wird. Das Einstellen kann ein Einstellen mindestens einer der folgenden Einstellungen umfassen: einer Bildrate zum Erfassen der ein oder mehreren ersten Bilder, einer Übertragungsrate der ein oder mehreren erfassten ersten Bilder von dem Abbildungs- und/oder Bildaufzeichnungssystem zu einem Arbeitsplatzrechner, der Vorrichtung oder einem Datenspeicher, einem Binning, einer Pixelauswahl aus allen Pixeln des Abbildungs- und/oder Bildaufzeichnungssystems zum Erfassen der ein oder mehreren ersten Bilder, einer Belichtungszeit, einem Scanformat oder einer Pixelauflösung zum Erfassen der ein oder mehreren ersten Bilder, wobei die ein oder mehreren ersten Bilder ein oder mehrere gescannte Bilder umfassen, einer Abtastfrequenz (beispielsweise eine Zeilenabtastfrequenz) des Abbildungs- und/oder Bildaufzeichnungssystems, wobei das Abbildungs- und/oder Bildaufzeichnungssystem ein scannendes Abbildungs- und/oder Bildaufzeichnungssystem umfasst, einer numerischen Apertur, NA, eines optischen Systems des Abbildungs- und/oder Bildaufzeichnungssystem und einer Lichtintensität einer Lichtquelle des Abbildungs- und/oder Bildaufzeichnungssystems. Ein weiterer Vorteil ist, dass mit einer kleineren Pixelauflösung, zum Beispiel weniger Bildzeilen bei einem abtastenden Punktdetektor (Scanner) oder mehr Binning bei einem Flächendetektor des Bilderfassungssystems, Bilder aufgenommen und anschließend auf eine gewünschte Größe gebracht werden können. Dies ermöglicht eine hohe Aufnahmegeschwindigkeit für eine Messung und/oder eine Verwendung einer probenschonenden oder kleinen Lichtdosis während einer Aufnahme.

In vorteilhaften Ausführungsformen kann die erste Auflösung des Bilderfassungssystems eingestellt werden. Zum Beispiel kann das Einstellen der ersten Auflösung ein Einstellen eines Binnings und/oder einer Auswahl einer Teilmenge von Pixeln des Abbildungs- und/oder Bildaufzeichnungssystems für das Erfassen der ein oder mehreren ersten Bilder umfassen. Durch eine Verkleinerung der ersten Auflösung des Abbildungs- und/oder Bildaufzeichnungssystems ist das Abbildungs- und/oder Bildaufzeichnungssystem ausgestaltet mittels Binning und/oder einer Auswahl einer Teilmenge von Pixeln eine Belichtungsdauer für das Erfassen der ein oder mehreren ersten Bilder zu verkleinern, mittels Binning eine Lichtintensität einer Lichtquelle des Abbildungs- und/oder Bildaufzeichnungssystems zu reduzieren, mittels Binning und/oder einer Auswahl einer Teilmenge von Pixeln eine Übertragungsrate der ein oder mehreren ersten Bilder zu erhöhen, mittels Binning und/oder einer Auswahl einer Teilmenge von Pixeln eine Bildrate zum Erfassen der ein oder mehreren ersten Bilder zu erhöhen, mittels Binning und/oder einer Auswahl einer Teilmenge von Pixeln eine maximale Anzahl von speicherbaren Bildern zu erhöhen oder mehr Speicherplatz für die ein oder mehreren erfassten Bilder zu generieren, mittels Binning und/oder einer Auswahl einer Teilmenge von Pixeln eine Aufnahmegeschwindigkeit zum Erfassen der ein oder mehreren ersten Bilder zu erhöhen, und/oder mittels Binning und/oder einer Auswahl einer Teilmenge von Pixeln eine größere Anzahl der ein oder mehreren erfassten ersten Bilder zu speichern. Beispielsweise können scannende Abbildungs- und/oder Bildaufzeichnungssysteme durch eine Auswahl einer Teilmenge von Pixeln die Belichtungsdauer reduzieren, da die Anzahl der Abtastpunkte reduziert wird und so die Probe über einen kürzeren Zeitraum Licht ausgesetzt wird.

Die erfindungsgemäße Vorrichtung, die Teil eines Bildaufnahmesystems, wie beispielsweise eines Mikroskops, sein kann, kann ausgestaltet sein die Aufnahmezeit einer Messung zu verkürzen, wenn weniger Bildzeilen gescannt oder Bildpunkte aufgenommen werden, den Speicherplatz für die Bilddaten zu reduzieren, wenn nur kleinere Bilder gespeichert werden, da die hochaufgelösten Bilder wieder rekonstruiert werden können, die Lichtdosis zur Beleuchtung eines Objekts zu reduzieren, und die Auflösung von erfassten Bildern zu erhöhen.

In einer Ausführungsform des erfindungsgemäßen Verfahrens werden Bilderpaare für ein Training des neuronalen Netzes mit einem zweiten und einem ersten Abbildungs- und/oder Bildaufzeichnungssystems erfasst, wobei das zweite Abbildungs- und/oder Bildaufzeichnungssystem ausgestaltet ist Bilder mit einer Auflösung zu erfassen, die höher ist als eine Auflösung des erste Abbildungs- und/oder Bildaufzeichnungssystem. Durch Training mit Bildpaaren, die durch unterschiedliche Techniken entstanden sind, wie beispielsweise beugungsbegrenzter Mikroskopie und Nanoskopie mit optischer Höchstauflösung, können hochskalierte Bilder mit einem höheren Detailkontrast erzeugt werden. Wenn das neuronale Netz in einem Kontext mit den ein oder mehreren erfassten ersten Bildern trainiert wurde, können Bildinformationen in den ein oder mehreren zweiten Bildern semantisch korrekt erzeugt werden.

In Ausführungsformen kann das Trainieren des (ersten) neuronalen Netzes ein Anwenden eines zweiten neuronalen Netzes umfassen. Das zweite neuronale Netz kann als Verlustfunktion für das Training des ersten neuronalen Netzes angewendet werden. Dies ermöglicht ein verbessertes Training des ersten neuronalen Netzes, da ein neuronales Netz als Verlustfunktion ein genaues Training ermöglicht, bei dem sichergestellt wird, dass die Ausgabe des neuronalen Netzes einem gewünschten Bild gleicht. Dies ist nicht gewährleistet, wenn nur pro Pixel ein Fehler beim Ausgabebild berechnet wird. Somit werden die ausgegebenen Bilder nicht als Menge unabhängiger Pixel behandelt, sondern in einen semantischen Zusammenhang gestellt.

In vorteilhaften Ausführungsformen kann das erste neuronale Netz weiter trainiert (feinjustiert) werden. Das Feinjustieren (im Folgenden auch Feintuning genannt) kann ein Trainieren nur eines Teils des bestimmten (ersten) neuronalen Netzes umfassen. Hierbei können ein oder mehrere Parameter des bestimmten neuronalen Netzes während des Feinjustierens unveränderlich bleiben. Das Feinjustieren kann anhand von individuellen Trainingsdaten durchgeführt werden.

Der vorliegende Erfindungsgegenstand soll im Weiteren anhand beispielhafter Zeichnungen näher beschrieben werden. In den Zeichnungen sind Beispiele vorteilhafter Ausgestaltungen der Erfindung gezeigt.

Es zeigen:
Figur 1 Bilder mit unterschiedlichen Auflösungen,
Figur 2 eine schematische Darstellung eines erfindungsgemäßen Verfahrens zur Skalierung von Bildern mittels eines neuronalen Netzes nach einer Ausführungsform,
Figur 3 eine schematische Darstellung eines erfindungsgemäßen Verfahrens zur Skalierung von Bildern mittels eines neuronalen Netzes nach einer Ausführungsform,
Figur 4A eine schematische Darstellung einer erfindungsgemäßen Vorrichtung nach einer Ausführungsform,
Figur 4B eine schematische Darstellung eines erfindungsgemäßen Systems zur Skalierung von Bildern nach einer Ausführungsform,
Figur 5A ein schematisches Flussdiagramm einer Ausführungsform des erfindungsgemäßen Verfahrens zur Skalierung von Bildern, und
Figur 5B ein schematisches Flussdiagramm einer Ausführungsform des erfindungsgemäßen Verfahrens zum Trainieren eines neuronalen Netzes.

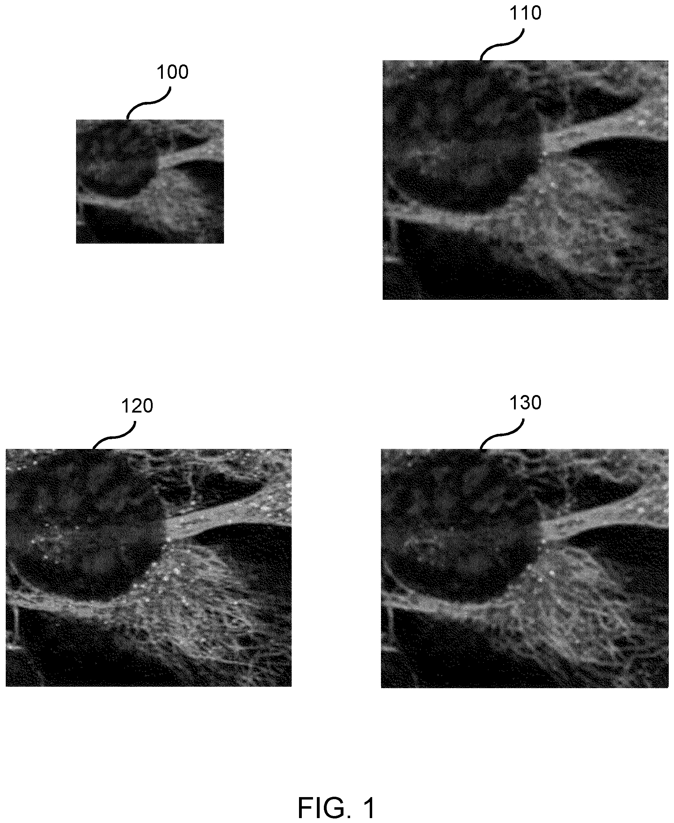

Figur 1 zeigt ein Bild 100 mit einer ersten (niedrigen) Auflösung, beispielsweise 73x75 Pixel, und Bilder 110, 120 und 130 mit einer zweiten (hohen) Auflösung, beispielsweise 250x300 Pixel. Die Bilder 100, 110, 120 und 130 zeigen das gleiche Objekt, gefärbte Vertebratenzellen. Bilder 100 und 120 können durch das gleiche Abbildungs- und/oder Bildaufzeichnungssystem, wie beispielsweise ein Mikroskop (Leica TCS SP 5), erfasst worden sein. Alternativ können Bilder 100 und 120 mit unterschiedlichen Bildaufzeichnungssystemen erfasst worden sein. Die unterschiedliche Auflösung der Bilder 100 und 120 führt zu einem Unterschied im Informationsgehalt der beiden Bilder, wobei das Bild 120 mit der hohen Auflösung einen höheren Informationsgehalt hat als das Bild 100 mit der niedrigen Auflösung. Zum Beispiel lassen sich in Bild 120 mehr Details des gleichen Objekts erkennen als in Bild 100. Die niedrige Auflösung mit der das erste Bild aufgenommen wurde, kann eine maximale Auflösung eines Bilderfassungssystems für eine Aufnahme sein oder eine Auflösung des Bildaufzeichnungssystems die für eine bestimmte Aufnahme oder bestimmte Gegebenheiten eingestellt wurde. Zum Beispiel kann eine höhere maximale Bildrate mit einer kleineren Auflösung erreicht werden. Allerdings gehen durch die kleinere Auflösung Bildinformationen verloren.

In Anwendungsfällen kann es vorteilhaft sein das Bild 100 hoch zu skalieren. Bilder 110 und 130 sind hochskalierte Bilder, die aus dem Bild 100 erzeugt wurden. Bild 110 ist ein mit bikubischer Interpolation hochskaliertes Bild und Bild 130 wurde mit Hilfe des erfindungsgemäßen Verfahrens zur Skalierung von Bildern nach einer Ausführungsform erzeugt. Die Auflösung des Bildes 100 begrenzt den Informationsgehalt in dem mit bikubischer Interpolation hochskalierten Bild 110, da die bikubische Interpolation lediglich glättet und keine neuen Informationen hinzugefügt werden. Wie in Figur 1 zu sehen ist, liefert das mit Hilfe des erfindungsgemäßen Verfahrens hochskalierte Bild 130 deutlich bessere Ergebnisse als das Interpolierte Bild 110 im Vergleich zum hochaufgelöst gemessenen Bild 120.

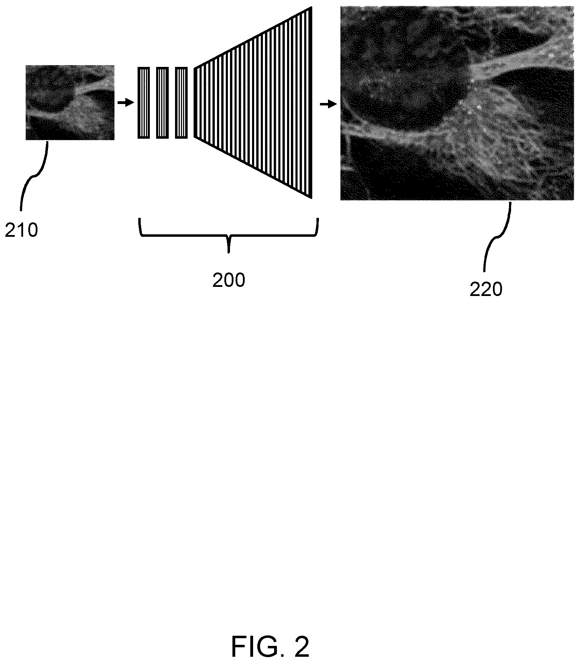

Figur 2 zeigt eine schematische Darstellung der Funktionsweise eines neuronalen Netzes 200 zur Skalierung von Bildern. Das neuronale Netz 200 ist ausgestaltet die Auflösung eines Bildes 210 zu verändern, indem das neuronale Netz 200 ein Bild 220 mit einer geänderten Auflösung erzeugt. Beispielsweise kann das neuronale Netz 200 ein Bild 220 mit einer doppelt so großen, einer viermal so großen oder einer m/n-mal so großen Auflösung ausgeben als das Eingabebild 210 des neuronalen Netzes, wobei *m* und n natürliche oder positive ganze Zahlen sind. In Ausführungsformen können einzelne Dimensionen eines Bildes skaliert werden.

Das Eingabebild 210 für das neuronale Netz 200 kann eine erste Auflösung umfassen. Wenn das neuronale Netz 200 auf Bild 210 angewendet wird oder dieses Bild 210 in das neuronale Netz 200 eingegeben wird, kann das neuronale Netz 200 das Bild 210 auf dem Ausgabebild 220 abbilden, wobei die Anzahl der Pixel des Bildes 210 nicht mit der Anzahl der Pixel des Bildes 220 übereinstimmen muss. Somit kann das Bild 210 hoch oder runter-skaliert werden. In Figur 2 ist das neuronale Netz 200 ausgestaltet Bild 220 aus einem Bild 210 zu erzeugen, wobei das Bild 220 eine größere Auflösung hat und/oder mehr Bildinformationen enthält als das Eingabebild 210. Das neuronale Netz kann ausgestaltet sein um fehlende Bildinformation in Bild 210 semantisch korrekt aus dem neuronalen Netz zu erzeugen. Das neuronale Netz 200 kann an Trainingsdaten trainiert worden sein, die in einem Kontext mit den erfassten Bildern stehen. Der Unterschied zu herkömmlichen Verfahren, wie bikubischer Interpolation, ist, dass die erzeugte Bildinformation nicht nur aus dem einen vorliegenden Bild stammt, sondern unter Berücksichtigung von gelernten Bildrepräsentationen aus einer Vielzahl von Bildern erzeugt wird. Auf diese Weise werden semantisch korrekte Bildinformationen ergänzt, die in dem vorliegenden niedrig aufgelösten Bild nicht enthalten sind.

Die Anwendung des neuronalen Netzes 200 unterscheidet sich vom Training des neuronalen Netzes 200 durch die verwendeten Datensätze. Beim Training werden ein oder mehrere erste Bilder in das neuronale Netz 200 eingegeben und interne Parameter des neuronalen Netzes so angepasst, dass die Ausgabebilder des neuronalen Netzes 200 bestmöglich mit Soll-Ausgabebildern übereinstimmen. Bei der Anwendung des neuronalen Netzes durchlaufen die Bilddaten einmal das neuronale Netz 200 und das neuronale Netz 200 erzeugt ein Ausgabebild als Vorhersage. Neuronale Netze können Ergebnisse darstellen, wobei diese durch mindestens einen Deep Learning Prozess und/oder mindestens eine Deep Learning Methode erlernt wurden. Diese neuronalen Netze kondensieren zu einem bestimmten Aufgaben-Ensemble gesammeltes Wissen in geeigneter Weise durch automatisiertes Lernen, derart, dass eine bestimmte Aufgabe fortan automatisiert und mit höchster Qualität durchgeführt werden kann.

Bild 210 kann ein Bild sein, das mit einem Bilderfassungssystem erfasst oder aufgenommen wurde. In einer Ausführungsform kann das erfasste Bild 210 vorbearbeitet werden, bevor es in das neuronale Netz 200 gegeben wird. Die Vorbearbeitung kann ein Interpolieren, wie beispielsweise eine bilineare, biquadratische oder bikubische Interpolation, des Bildes 210 umfassen. Das Bild 210 kann beispielsweise auf die gewünschte Ausgabegröße des neuronalen Netzes interpoliert werden. Dies entspricht der Bildgröße des Bildes 220.

Das neuronale Netz kann dann auf das interpolierte Bild angewendet werden und erzeugt ein Ausgabebild, wobei sich das Ausgabebild und das interpolierte Bild durch ihren Informationsgehalt, ihren Detailkontrast und/oder ihre Schärfe unterscheiden. Zum Beispiel kann der Informationsgehalt, der Detailkontrast und/oder die Schärfe des Ausgabebildes im Vergleich zum interpolierten Bild erhöht sein. Alternativ kann die Vorbearbeitung auch Teil des neuronalen Netzes sein.

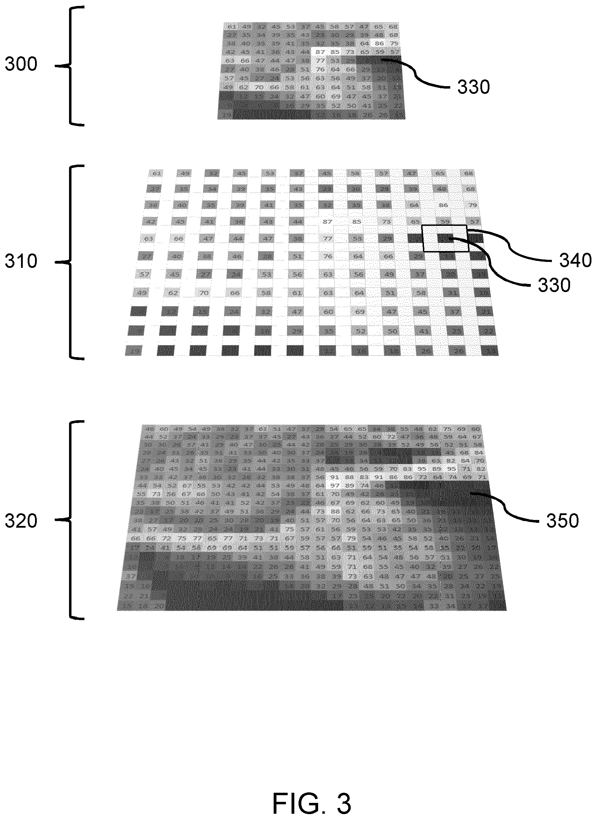

In Figur 3 wird das Prinzip der Hochskalierung schematisch dargestellt. Ein erstes Bild 300 mit einer ersten (niedrigen) Auflösung von 11x12 Pixeln umfasst einen Pixel 330 mit einem Wert 68. Das erste Bild 300 kann abgetastet werden und auf eine gewünschte Größe gebracht werden. Hierbei können beispielsweise entstehende Lücken mit dem Pixelwert Null aufgefüllt werden, sodass ein zweites Bild 310 entsteht, das die gleiche Auflösung oder Größe hat wie das gewünschte Bild 320. Auf das Bild 310 kann in einem nächsten Schritt eine Faltungsmatrix 340 angewendet werden. In Figur 3 hat die Faltungsmatrix 340 beispielsweise eine Größe von 3x3 Pixeln. Durch das Falten der Faltungsmatrix 340 mit dem Bild 310 kann sich das Bild 320 ergeben. Dies entspricht einer Schrittgröße von ungefähr ½ beim Hochskalieren. Das neuronale Netz zum Skalieren von Bildern kann eine Vielzahl von Schichten haben, wobei die Schrittgröße bei den Faltungen in den Schichten unterschiedlich groß sein kann. Zum Beispiel erzeugt eine Schrittgröße von 1 bei einer Faltung ein neues Bild mit einer Größe, die der Größe des Eingangsbildes entspricht, eine Schrittgröße von größer als 1 ein neues Bild mit einer kleineren Größe als der Größe des Eingangsbildes und eine Schrittgröße von kleiner als 1 ein neues Bild mit einer größeren Größe als der des Eingangsbildes.

Die Parameter der Faltungsmatrix werden von dem neuronalen Netz in einem Training gelernt. So kann das neuronale Netz angewendet auf Eingangsbilder Ausgabebilder mit einer höheren Auflösung erzeugen, wobei fehlende Bildinformationen aus dem Eingangsbild durch das neuronale Netz erzeugt werden. Das neuronale Netz kann versteckte Repräsentationen (engl. "hidden representations") durch ein Training mit einer Vielzahl von Trainingsbildern erlernen. Somit können semantisch korrekte Bilder mit einer höheren Auflösung aus Bildern mit einer niedrigen Auflösung erzeugt werden.

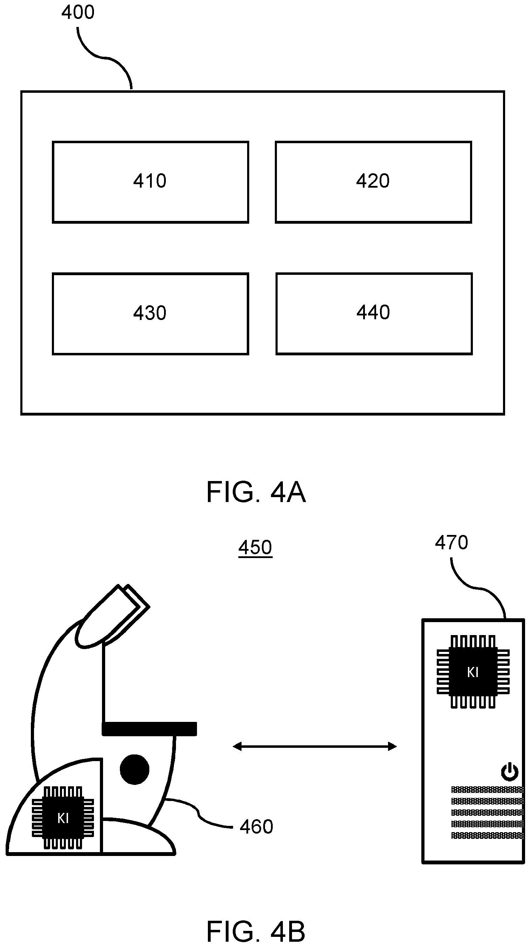

Figur 4A zeigt eine Vorrichtung 400, die ein oder mehrere Prozessoren 410 und ein oder mehrere Speichermedien 420 umfasst. Die Vorrichtung 400 kann ein Abbildungs- und/oder Bildaufzeichnungssystem umfassen. Alternativ kann die Vorrichtung 400 auch räumlich von einem Abbildungs- und/oder Bildaufzeichnungssystem getrennt sein und über ein Netzwerk, beispielsweise einem Funknetz, mit dem Abbildungs- und/oder Bildaufzeichnungssystem verbunden sein. In diesem Fall kann die Vorrichtung einen Arbeitsplatzrechner, einen Server, einen Kleinstrechner, Computer oder Embedded-Computer umfassen.

Die ein oder mehreren Prozessoren 410 können Rechenbeschleuniger, wie Graphical Processing Units (GPUs), TensorFlow Processing Units oder Tensor Processing Units (TPUs) auf Machine Learning (ML)- und/oder Deep Learning (DL)- spezialisierte Application Specific Integrated Circuits (ASICs) oder Field Programmable Gated Arrays (FPGAs) oder mindestens eine Central Processing Unit (CPU) umfassen. Eine anwendungsspezifische integrierte Schaltung (englisch Application Specific Integrated Circuit, ASIC, auch Custom Chip) ist eine elektronische Schaltung, die als integrierter Schaltkreis realisiert werden kann. Wegen der Anpassung ihrer Architektur auf ein spezifisches Problem arbeiten ASICs sehr effizient und um einiges schneller als eine funktionsgleiche Umsetzung per Software in einem Mikrocontroller. TPUs, auch TensorFlow-Prozessoren, sind anwendungsspezifische Chips und können Anwendungen im Rahmen von maschinellem Lernen im Vergleich zu CPUs beschleunigen. Diese oder ähnliche spezialisierte Hardware kann genutzt werden um Deep Learning-Aufgaben optimal zu lösen. Insbesondere die Anwendung eines neuronalen Netzes, die Größenordnungen weniger Rechenleistung benötigt als das Training, also die Entwicklung eines Modells, funktioniert auch auf üblichen CPUs.

Des Weiteren kann die Vorrichtung in Ausführungsformen ein oder mehrere neuronale Netze 430 umfassen. Mit Hilfe der ein oder mehrere neuronalen Netze 430 kann die Vorrichtung 400 befähigt werden mittels künstlicher Intelligenz (KI) Bilder zu Skalieren. Die ein oder mehreren Bilder können Einzelbildern, 3D-Bilderstapel, Videos, Bilder von mehrdimensionalen Zeitserien und/oder verschiedenen Skalen umfassen. Die ein oder mehreren neuronalen Netze 430 können durch die ein oder mehreren Prozessoren 410 ausgeführt werden. Das Ausführen von neuronalen Netzen 430 benötigt Größenordnungen weniger Rechenleistung als das Training oder die Entwicklung eines neuronalen Netzes.

Durch das Implementieren des neuronalen Netzes 430 auf der Vorrichtung 400 erlangt diese zusätzliche "Intelligenz". Die Vorrichtung 400 kann so in die Lage versetzt werden eine gewünschte Aufgabe selbstständig zu lösen. Somit ergibt sich eine kognitiv erweiterte Vorrichtung 400. Kognitiv erweitert bedeutet, dass die Vorrichtung durch Einsatz neuronaler Netze (z. B. Deep Learning-Modelle) oder anderer Maschinenlernverfahren dazu befähigt werden kann, Bildinhalte oder andere Daten semantisch zu erkennen und zu verarbeiten.

Des Weiteren kann die Vorrichtung 400 ein oder mehrere Komponenten 440 umfassen. Zum Beispiel können die ein oder mehrere Komponenten 440 eine Nutzerschnittstelle, eine Schnittstelle um neuronale Netze auf die Vorrichtung 400 herunterzuladen, oder ein Bilderfassungssystem umfassen.

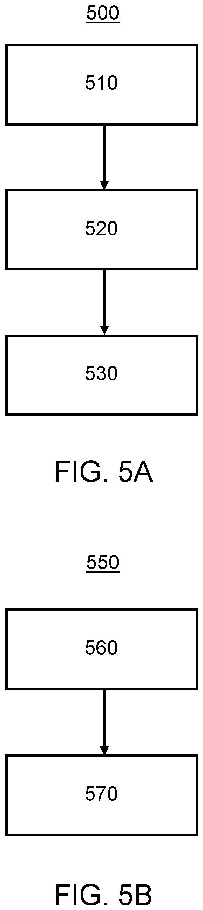

In Ausführungsformen kann die Vorrichtung 400 genutzt werden, um ein neuronales Netz 430 zu trainieren. Auf den ein oder mehreren computerlesbaren Speichermedien 420 gespeicherte computerausführbare Anweisungen können, wenn sie von dem einen oder den mehreren Prozessoren 410 ausgeführt werden, bewirken, dass eines oder Teile der Verfahren nach den Figuren 5A und/oder 5B ausgeführt werden.

Figur 4B zeigt ein System 450, das ein Abbildungs- und/oder Bildaufzeichnungssystem 460 und einen Computer 470, beispielsweise einen Arbeitsplatzrechner, umfasst, die über ein Netzwerk, beispielsweise ein Funknetz oder ein Glasfasernetz, verbunden sind. In Ausführungsformen kann das Abbildungs- und/oder Bildaufzeichnungssystem 460 und/oder der Arbeitsplatzrechner 470 die Vorrichtung 400 umfassen. Somit können das Bildaufzeichnungssystem 460 und/oder der Arbeitsplatzrechner 470 mit künstlicher Intelligenz (KI) ausgestaltet sein. Alternativ kann die Vorrichtung 400 räumlich getrennt von dem Abbildungs- und/oder Bildaufzeichnungssystem 460 und/oder dem Arbeitsplatzrechner 470 sein und durch ein Netzwerk mit diesen verbunden sein.

Das Abbildungs- und/oder Bildaufzeichnungssystem 460 kann ein optisches System, wie beispielsweise ein Objektiv, Optiken oder einzelne Linsen, und ein Detektionssystem, wie beispielsweise eine photographische Schicht, einen sCMOS- ("scientific complementary metal-oxide-semiconductor") oder CCD- ("charge-coupled device") Sensor, umfassen. Zum Beispiel kann das Abbildungs- und/oder Bildaufzeichnungssystems 460 ein Mikroskop mit einer Kamera, eine Videokamera, ein Mikroskopsystem, ein Mikroskop mit einem Punktscanner, eine Digitalkamera, ein Smartphone, ein Teleskop, ein Messgerät oder einen Computer mit Kamera umfassen. Figur 4B zeigt Bildaufzeichnungssystem 460 nur beispielhaft als Lichtmikroskop. In Ausführungsformen kann Bildaufzeichnungssystem 460 alle Arten von Mikroskopen umfassen. Zum Beispiel kann ein Mikroskop eines der folgenden umfassen: ein Lichtmikroskop, ein Stereo-Mikroskop, ein Konfokal-Mikroskop, ein Multiphotonen-Mikroskop, ein STED-Mikroskop, ein Spaltlampenmikroskop, ein Operationsmikroskop, ein Digitalmikroskop, ein USB-Mikroskop, ein Elektronenmikroskop, ein Rasterlektronenmikroskop, ein Spiegelmikroskop, ein Fluoreszenzmikroskop, ein Focusedlon-Beam-Mikroskop (FIB), ein Helium-Ionen-Mikroskop, ein Magnetresonanzmikroskop, ein Neutronenmikroskop, ein Raster-SQUID-Mikroskop, ein Röntgenmikroskop, ein Ultraschallmikroskop, ein Lichtscheibenmikroskop (SPIM) oder ein akustisches Mikroskop, etc.

Figur 4B zeigt in einer Ausführungsform eine Kommunikation eines Kl-befähigten Mikroskops 460 mit einem Kl-befähigten Computer 470. Ein einzelnes Bildaufzeichnungssystem kann dabei selbst Hardwarebeschleunigung und/oder einen Kleinstrechner, wie die Vorrichtung 400, umfassen, die die Ausführung von trainierten Modellen (z. B. neuronalen Netzen) ermöglichen. Alternativ kann auch nur das Bildaufzeichnungssystem 460 oder nur der Computer 470 Kl-befähigt werden.

In Ausführungsformen ist das Bilderfassungssystem 460 ausgestaltet um ein oder mehrere Bilder zu erfassen. Die ein oder mehreren erfassten Bilder können lokal auf dem Bilderfassungssystem 460 oder räumlich getrennt von dem Bilderfassungssystem 460 gespeichert werden. Zum Beispiel kann das Bilderfassungssystem 460 die ein oder mehreren Bilder zum Arbeitsplatzrechner 470 oder zu der Vorrichtung 400 über ein Netzwerk senden, auf denen die Bilder dann gespeichert werden. Die ein oder mehreren abgespeicherten Bilder können dann in ein neuronales Netz zur Skalierung von Bildern gegeben werden. Alternativ können die ein oder mehreren erfassten Bilder direkt in das neuronale Netz gegeben werden und nur die ein oder mehreren korrigierten Bilder gespeichert werden. Dies ermöglicht eine Skalierung der Bilder in Echtzeit. In einer Ausführungsform kann für eine Vielzahl von Bildern oder einen sehr großen Datenstapel die Hochskalierung auch asynchron auf einem Cluster im Netzwerk oder in einer Cloud erfolgen.

In einer Ausführungsform findet die Verarbeitung der aufgenommenen Bilder auf dem Computer 470 statt, auf dem eine Software läuft, die ein neuronales Netz implementiert, das Bilder auf intelligente Weise skalieren kann. Fehlende Bildinformation kann semantisch korrekt aus im neuronalen Netz durch Lernen vorliegende versteckte Repräsentationen ("hidden representations") erzeugt werden. Somit kann das System 450 Aufnahmen oder Messungen mit höherer Geschwindigkeit machen und/oder Datenreduktion betreiben. Der benötigte Speicherplatz bzw. die Speicherbandbreite kann verringert werden.

Der Geschwindigkeitsgewinn basiert darauf, dass weniger Bildpunkte aufgenommen werden müssen als eigentlich nötig, um die gewünschte Auflösung zu erreichen. In Abhängigkeit des Lichtsensors des Bilderfassungssystems kann zwischen Punktdetektoren und Flächendetektoren unterscheiden werden. Punktdetektoren kommen in der Mikroskopie vor allem bei konfokalen Laserscanningmikroskopen zum Einsatz. Beim Laserscanningverfahren wird das Bild durch zeilenweises Abtasten einer Probe erzeugt. Die Bildaufnahmezeit hängt von der Anzahl der abgetasteten Zeilen ab. Wird beispielsweise die Anzahl der Zeilen auf ein Viertel reduziert, lässt sich die Aufnahmegeschwindigkeit etwa vervierfachen. Flächendetektoren können bei der Weitfeldmikroskopie eingesetzt werden. Hier kann ein Geschwindigkeitsvorteil durch Binning entstehen, also Pixel zusammengefasst werden. Dadurch verringern sich die Auflösung und die Belichtungszeit, was die Aufnahmegeschwindigkeit erhöht.

Unabhängig von der verwendeten Aufnahmetechnik hängt die Speichergröße eines nicht komprimierten zweidimensionalen Bildes quadratisch mit der Auflösung in jeder Raumrichtung zusammen. Wenn die gewünschten Bildinhalte durch intelligentes Hochskalieren rekonstruiert werden können, ist es möglich, die Bilder vor dem Abspeichern entsprechend herunter zu skalieren. In einer Ausführungsform kann ein neuronales Netz zum intelligenten Hochskalieren von Bildern in drei Raumdimensionen und der Zeitdimension angewendet werden, wodurch sich die zu speichernde Datenmenge reduzieren lässt. Die Speicherersparnis S ergibt sich nach: S = ß^{d}. Dabei ist S der Faktor der Speicherersparnis gegenüber der vollen Auflösung, ß das isotrope Binning in jeder Raumrichtung und d ist die Dimension des Bildes. Bei einem 3D-Stapel mit einem isotropen Binning von ß = 4 ergibt sich so beispielsweise eine Speicherreduktion von S = 64.

In der Mikroskopie werden häufig lichtempfindliche Proben oder Farbstoffe eingesetzt, die durch Einsatz hoher Lichtdosis photochemisch zersetzt werden können. Dies wird auch als Photobleichen bezeichnet. Stärkeres Binning beim Flächendetektor, bzw. um den Binning-Faktor verringerte Pixelauflösung beim Punktdetektor, setzt die Probe für eine kürzere Zeitdauer Licht aus. Das Binning hat somit den Effekt, dass eine Lichtdosis verringert werden kann. Durch eine Verringerung der Lichtdosis und einer Erhöhung der Aufnahmegeschwindigkeit kann der Effekt des Photobleichens reduziert werden und der Anwendungsbereich von Mikroskopen erweitert werden.

Ist bei der Aufnahme die maximal förderliche Auflösung gegeben, also die Pixelgröße etwa zwei bis dreimal kleiner als die entsprechende "Point Spread Function", so führt eine Erhöhung der Pixelzahl nicht mehr zu einer Erhöhung der Bildinformation. Intelligentes Hochskalieren kann in diesem Grenzbereich zu einem Bild führen, das mehr Bildinformation enthält. Zu diesem Zweck kann das eingesetzte neuronale Netz oder trainierte Modell derart trainiert worden sein, dass im Trainingsdatensatz die Eingabebilder beugungsbegrenzte Bilder umfassen, während die Bilder, die am Ausgang des Modells als Zielwert vorliegen (Soll-Ausgabebilder), die gleiche Stelle oder das gleiche Objekt aufgenommen mit einer optischen Höchstauflösungsmethode zeigt. Durch ein Training kann dann das neuronale Netz diese optische Höchstauflösungsmethode simulieren. In Ausführungsformen kann beispielsweise die Weitfeldmikroskopie genutzt werden um ein niedrig aufgelöstes Bild als Eingabebild für das Training und die Konfokalmikroskopie um ein hochaufgelöstes Bild als entsprechendes Soll-Ausgabebild zu erzeugen. Alternativ könnte auch mittels Konfokalmikroskopie ein niedrig aufgelöstes Bild als Eingabebild für das Training und mittels "Stimulated Emission Depletion" (STED) - Nanoskopie ein hochaufgelöstes Bild als entsprechendes Soll-Ausgabebild erzeugt werden.

Figur 5A zeigt ein schematisches Flussdiagramm nach einem Ausführungsbeispiel eines erfindungsgemäßen (computer-implementierten) Verfahrens 500 zur Skalierung von Bildern. Das Verfahren 500 kann einen ersten Schritt 510 umfassen, in welchem ein Abbildungs- und/oder Bildaufzeichnungssystem eingestellt wird. Beispielsweise kann eine Auflösung mit der das Abbildungs- und/oder Bildaufzeichnungssystem ein oder mehrere Bilder aufnimmt eingestellt werden. Dies kann durch Binning (ein Zusammenfassen von Pixeln) oder durch eine Auswahl von Bestimmten Pixeln für eine Aufnahme umfassen. Des Weiteren kann eine Bildrate zum Erfassen der ein oder mehreren ersten Bilder, eine Übertragungsrate der ein oder mehreren erfassten ersten Bilder von dem Abbildungs- und/oder Bildaufzeichnungssystem zu einem Computer oder einem Arbeitsplatzrechner, der Vorrichtung oder einem Datenspeicher, eine Belichtungszeit, ein Scanformat oder eine Pixelauflösung zum Erfassen der ein oder mehreren ersten Bilder, wobei die ein oder mehreren ersten Bilder ein oder mehrere gescannte Bilder umfassen, eine Abtastfrequenz (beispielsweise eine Zeilenabtastfrequenz) des Abbildungs- und/oder Bildaufzeichnungssystems, wobei das Abbildungs- und/oder Bildaufzeichnungssystem ein scannendes Abbildungs- und/oder Bildaufzeichnungssystem umfasst, eine numerischen Apertur, NA, eines optischen Systems des Abbildungs- und/oder Bildaufzeichnungssystem und/oder eine Lichtintensität einer Lichtquelle des Abbildungs- und/oder Bildaufzeichnungssystems eingestellt werden. Die Abtastfrequenz kann mit einer Geschwindigkeit, mit der eine Lichtquelle (beispielsweise ein Laser) des Abbildungs- und/oder Bildaufzeichnungssystems ein Objekt abtastet, zusammenhängen. Das Scanformat kann eine räumliche Auflösung (beispielsweise 1024 x 1024 oder 512 x 512) beim Scannen festlegen. Die Einstellungen des Abbildungs- und/oder Bildaufzeichnungssystem können mit der Auflösung zusammenhängen. Zum Beispiel kann eine Bildrate erhöht werden, wenn die Auflösung verkleinert wird, oder durch Binning (Verkleinerung der Auflösung) kann die Lichtintensität und/oder die Belichtungszeit einer Lichtquelle des Abbildungs- und/oder Bildaufzeichnungssystem reduziert werden.

In einem zweiten Schritt 520, können ein oder mehrere erste Bilder mittels eines Abbildungs- und/oder Bildaufzeichnungssystems erfasst werden. Die ein oder mehreren erfassten ersten Bildern hängen mit einer ersten Auflösung zusammen.

In einem dritten Schritt 530 erzeugt ein neuronales Netz, zum Beispiel in Echtzeit, in Abhängigkeit der ein oder mehreren erfassten ersten Bilder ein oder mehrere entsprechende zweite Bilder. Die ein oder mehreren zweiten Bilder hängen mit einer zweiten Auflösung zusammen, wobei sich die erste Auflösung und die zweite Auflösung unterscheiden. Das neuronale Netz kann direkt auf jedes der ein oder mehreren erfassten ersten Bilder angewendet werden und nur die ein oder mehreren zweiten Bilder können abgespeichert werden.

In einer Ausführungsform skaliert das neuronale Netz ein niedrig aufgelöstes Bild hoch und das hochskalierte Bild wird an einen Computer zur Weiterverarbeitung geschickt. Alternativ kann das niedrig aufgelöste Bild an einen Computer geschickt werden und auf dem Computer mit Hilfe des neuronalen Netzes hochskaliert werden.

Neuronale Netze können mit Deep Learning Methoden trainiert werden. Dies umfasst eine planmäßige Anwendung von mindestens einem Deep Learning Verfahren, vorzugsweise aber mehreren Deep Learning Verfahren zum Erreichen eines bestimmten Ziels. Das Ziel kann dabei die Bildbearbeitung umfassen (z. B. Korrektur von ein oder mehreren optischen Fehlern, Erzeugung eines Bildes aus einem anderen Bild, wobei sich mindestens ein Merkmal in den Bildern unterscheidet, etc.). Deep Learning Verfahren können eine Folge von Verfahrensschritten umfassen, welche einen Ablauf in nachvollziehbare Schritte unterteilen, und zwar derart, dass dieser Ablauf wiederholbar wird. Bei den Verfahrensschritten kann es sich um bestimmte Deep Learning Algorithmen handeln. Es können aber auch Methoden sein, mit denen ein Netz lernt (z. B. Backpropagation), es kann z. B. die Art der Datenerhebung sein oder die Art wie Daten über Hardware prozessiert werden etc.

Figur 5B zeigt ein schematisches Flussdiagramm eines computer-implementierten Verfahrens 550 zum Trainieren eines neuronalen Netzes zur Skalierung von Bildern. In einem ersten Schritt 560 werden Bilderpaare als Trainingsdaten bestimmt, um anhand dieser Bilderpaare ein neuronales Netz zu trainieren (Schritt 570). Das Bestimmen der Trainingsdaten oder Trainingsbilder kann ein oder mehrere Messungen und/oder ein oder mehrere Simulationen in Zusammenhang mit ein oder mehreren Probentypen umfassen, um die Trainingsdaten zu erzeugen. Alternativ können Trainingsdaten, die in einer Datenbank gespeichert sind oder von Dritten zur Verfügung gestellt werden, für das Training bestimmt werden. Die Bilderpaare umfassen Eingangsbilder und Soll-Ausgabebilder.

Verlustfunktionen, die auf einem pro-Pixel-Verlust basieren, sind fehleranfällig und können unpräzise Ergebnisse für ein Training liefern. Um diesen Nachteilen zu begegnen, können in Ausführungsformen Verlustfunktionen verwendet werden, die Wahrnehmungsunterschiede und semantische Unterschiede zwischen Bildern bestimmen. Daher kann ein zweites neuronales Netz als Verlustfunktion für das erste neuronale Netz (das zu trainierende neuronale Netz) bestimmt werden. Beispielsweise kann dies durch ein Trainieren des zweiten neuronalen Netzes geschehen. Alternativ kann das Bestimmen des zweiten neuronalen Netzes ein Auswählen des zweiten neuronalen Netzes aus einer Vielzahl von neuronalen Netzen umfassen, wobei die Vielzahl von neuronalen Netzen an verschiedenen Probentypen trainiert wurden und das zweite neuronale Netz in Abhängigkeit von dem Probentyp ausgewählt wird. Das zweite neuronale Netz kann an einem Probentyp trainiert worden sein oder trainiert werden, der in einem Zusammenhang mit dem späteren Anwendungszweck des ersten neuronalen Netzes steht. Das zweite neuronale Netz kann ausgestaltet sein Vorhersagen, wie beispielsweise eine Klassifizierung, basierend auf Bildern als Eingabewert für das zweite neuronale Netz zu treffen. Durch das Verlustnetz kann somit ein Wahrnehmungsfehler (engl. "perceptual loss") bestimmt werden, mit dessen Hilfe sich sicherstellen lässt, dass die Ausgabe des neuronalen Netzes wie ein zu erwartendes Bild aussieht. Dies ist bei Verlustfunktionen, die nur pro Pixel eines Bildes einen Fehler berechnen, nicht gegeben. Somit werden die ausgegebenen Bilder nicht als Menge unabhängiger Pixel behandelt, sondern in einen semantischen Zusammenhang gestellt.

In Schritt 520 wird das erste neuronale Netz anhand der Trainingsdaten aus Schritt 510 trainiert. Während des Trainings in Schritt 520 werden innere Parameter (beispielsweise Gewichte / Filter "W" und Schwellwerte "B") des ersten neuronalen Netzes gefunden, die eine Vielzahl von in das erste neuronale Netz eingegebenen Eingabebildern optimal oder bestmöglich auf die Soll-Ausgabebilder abbilden. Somit ist das erste neuronale Netz in der Lage neue Bilder aus Bildern zu erzeugen und eine Aufgabe zu lösen, die in Zusammenhang mit den Trainingsdaten steht. Das erste neuronale Netz kann trainiert werden Bilder zu skalieren.

Des Weiteren kann das erste neuronale Netz, das in Schritt 520 trainiert wurde, feinjustiert werden. Hierbei wird das erste neuronale Netz weiter trainiert um ein adaptiertes (drittes) neuronales Netz zu erhalten. Das adaptierte neuronale Netzt kann für eine spezielle Anwendung trainiert werden. Beispielsweise kann das erste neuronale Netz anhand von speziellen Trainingsdaten weiter trainiert werden. Somit kann das adaptierte (dritte) neuronale Netz speziell für einen bestimmten Anwendungszweck weiter trainiert werden, indem Trainingsdaten eines bestimmten Probentyps (die in einem Kontext mit dem bestimmten Anwendungszweck stehen) für das Feintuning verwendet werden. Beim weiteren Trainieren (Feintuning) können diese speziellen Trainingsdaten verwendet werden um mindestens einen Teil des vortrainierten (ersten) neuronalen Netzes weiter zu trainieren. Beispielsweise kann nur ein Teil der inneren Parameter des neuronalen Netzes in Abhängigkeit des weiteren Trainings verändert werden, wobei die restlichen inneren Parameter nicht durch das weitere Training verändert werden können. Dies ermöglicht eine schnelle individuelle Anpassung des neuronalen Netzes an einen bestimmten Verwendungszweck, wie beispielsweise das Hochskalieren von Bildern die einen bestimmten Probentyp abbilden.

Durch Feintuning neuronaler Netze können diese beständig verbessert und/oder der Anwendungsbereich der neuronalen Netze spezifiziert werden. Dies kann vorteilhaft durch Training nur weniger Knoten in einem neuronalen Netz geschehen.

Anschließend kann das adaptierte neuronale Netz für Dritte zur Verfügung gestellt werden, auf einer Vorrichtung zur Anwendung gebracht werden, wobei die Vorrichtung in Zusammenhang mit dem optischen System steht, oder in einer Cloud, auf einem Server oder einem anderen Datenspeicher abgespeichert werden.

Bilder mit einer bestimmten Auflösung können mit Hilfe von Maschinenlern (ML)-Methoden skaliert werden. Die beschriebenen ML-Methoden umfassen Algorithmen, mit denen Maschinen aus Erfahrung lernen können und können aus dem sog. "Deep Learning" (DL), einer bestimmten Art neuronaler Netze, kommen.

Das neuronale Netz wird trainiert um Objekte in einem erfassten Bild in ein hochskaliertes Bild zu übertragen derart, dass "implizit", also als Teil der gelernten Parameter, im Netz das Objekt korrekt rekonstruiert wird. Das neuronale Netz kann beim Training ähnliche Objekte gesehen haben. Ähnlich bedeutet hier, dass die gleichen Bildmerkmale in den Trainingsbildern vorhanden waren wie auch in den zu skalierenden Bildern, die Trainingsbilder also in einem Kontext mit den erfassten Bildern stehen.

Die erfindungsgemäße Vorrichtung und das erfindungsgemäße Verfahren stellen Mittel zur Skalierung von Bildern bereit. Die erfindungsgemäße Vorrichtung ist ausgestaltet um mit Hilfe eines neuronalen Netzes ein oder mehrere erfasste Bilder zu skalieren. Dies kann vorteilhaft schon während oder direkt nach dem Erfassen der Bilder, also vor dem Abspeichern des Bildes ("in Echtzeit") erfolgen. Die Bildskalierung ist somit Teil des Aufnahmeprozesses von Bildern.

### Bezugszeichen:

- 110, 120, 130, 140: Bilder
- 210, 220: Bilder
- 200: neuronales Netz
- 300, 310, 320: Bilder
- 330, 350: Pixel
- 340: Faltungsmatrix
- 400: Vorrichtung
- 410: Prozessor
- 420: Speichermedium
- 430: neuronales Netz
- 440: Komponenten
- 450: System
- 460: Abbildungs- und/oder Bildaufzeichnungssystem
- 470: Computer
- 500,550: Verfahren
- 510 - 530, 560, 570: Verfahrensschritte

## Patentansprüche

1. Vorrichtung (400) zur Skalierung von Bildern, umfassend:
ein oder mehrere Prozessoren (410);
ein oder mehrere computerlesbare Speichermedien (420), auf denen computerausführbare Anweisungen gespeichert sind, die, wenn sie von dem einen oder den mehreren Prozessoren (410) ausgeführt werden, bewirken, dass
eine erste Auflösung eingestellt wird, wobei das Einstellen der ersten Auflösung ein Einstellen eines Binnings und/oder einer Auswahl einer Teilmenge von Pixeln eines Mikroskops für das Erfassen der ein oder mehreren ersten Bilder (100; 210) umfasst;
das Mikroskop in Abhängigkeit von der ersten Auflösung eingestellt wird, wobei das Einstellen des Mikroskops ein Einstellen von mindestens einem der folgenden umfasst: einer numerischen Apertur, NA, eines optischen Systems des Mikroskops, einer Belichtungszeit, und einer Lichtintensität einer Lichtquelle des Mikroskops;
ein oder mehrere erste Bilder (100; 210) mittels des Mikroskops erfasst werden, wobei die ein oder mehreren erfassten ersten Bildern (100; 210) die erste Auflösung umfassen; und
ein neuronales Netz (200; 430) auf die ein oder mehreren erfassten ersten Bilder (100; 210) angewendet wird um ein oder mehrere entsprechende zweite Bilder (130; 220) zu erzeugen, wobei die ein oder mehreren zweiten Bilder (130; 220) eine zweite Auflösung umfassen, wobei sich die erste Auflösung und die zweite Auflösung unterscheiden, wobei die ein oder mehreren erfassten ersten Bilder (100; 210) eine kleinere Auflösung haben als die ein oder mehreren zweiten Bilder (130; 220).

2. Vorrichtung (400) nach Anspruch 1, **dadurch gekennzeichnet, dass** durch eine Verkleinerung der ersten Auflösung das Mikroskop) ausgestaltet ist
- mittels Binning und/oder einer Auswahl einer Teilmenge von Pixeln eine Belichtungsdauer für das Erfassen der ein oder mehreren ersten Bilder (100; 210) zu verkleinern,
- mittels Binning eine Lichtintensität einer Lichtquelle des Mikroskops zu reduzieren,
- mittels Binning und/oder einer Auswahl einer Teilmenge von Pixeln eine Übertragungsrate der ein oder mehreren ersten Bilder (100; 210) zu erhöhen,
- mittels Binning und/oder einer Auswahl einer Teilmenge von Pixeln eine Bildrate zum Erfassen der ein oder mehreren ersten Bilder (100; 210) zu erhöhen,
- mittels Binning und/oder einer Auswahl einer Teilmenge von Pixeln eine maximale Anzahl von speicherbaren Bildern zu erhöhen,
- mittels Binning und/oder einer Auswahl einer Teilmenge von Pixeln eine Aufnahmegeschwindigkeit zum Erfassen der ein oder mehreren ersten Bilder (100; 210) zu erhöhen, und/oder
- mittels Binning und/oder einer Auswahl einer Teilmenge von Pixeln eine größere Anzahl der ein oder mehreren erfassten ersten Bilder (100; 210) zu speichern.

3. Vorrichtung (400) nach einem der Ansprüche 1 und 2, **dadurch gekennzeichnet, dass** die ein oder mehreren erfassten ersten Bilder (100; 210) abgespeichert werden und das neuronale Netz (200; 430) auf die ein oder mehreren abgespeicherten ersten Bilder (100; 210) angewendet wird.

4. Vorrichtung (400) nach Anspruch 3, **dadurch gekennzeichnet, dass** die erste Auflösung der ein oder mehreren erfassten ersten Bilder (100; 210) vor dem Speichern reduziert wird.

5. Vorrichtung (400) nach einem der Ansprüche 1 bis 4, **dadurch gekennzeichnet, dass** Mikroskop ein Mikroskop mit einer Kamera, eine Videokamera, ein Mikroskopsystem, ein Mikroskop mit einem Punktscanner umfasst.

6. Vorrichtung (400) nach einem der Ansprüche 1 bis 5, **dadurch gekennzeichnet, dass** die ein oder mehreren Prozessoren (410) Rechenbeschleuniger, wie Graphical Processing Units, GPUs, oder Field Programmable Gated Arrays, FPGAs, Tensor Processing Units, TPUs, auf Machine Learning, ML,- und/oder Deep Learning, DL,- spezialisierte Application Specific Integrated Circuits, ASICs oder mindestens eine Central Processing Unit, CPU, umfassen.

7. Vorrichtung (400) nach einem der Ansprüche 1 bis 6, **dadurch gekennzeichnet, dass** das neuronale Netz (200; 430) in einem Kontext mit den ein oder mehreren ersten Bildern (100; 210) trainiert wurde und in den ein oder mehreren zweiten Bildern Bildinformationen enthalten sind, die semantisch korrekt aus dem neuronalen Netz (200; 430) erzeugt wurden.

8. Vorrichtung (400) nach einem der Ansprüche 1 bis 7, **dadurch gekennzeichnet, dass** das neuronale Netz (200; 430) an Bilderpaaren trainiert wurde, wobei Eingabebilder der Bilderpaare mit einem ersten Abbildungs- und/oder Bildaufzeichnungssystems (460) und den Eingabebildern entsprechende Soll-Ausgabebilder der Bilderpaare mit einem zweiten Abbildungs- und/oder Bildaufzeichnungssystems (460) erfasst wurden, wobei sich das erste Abbildungs- und/oder Bildaufzeichnungssystem von dem zweiten Abbildungs- und/oder Bildaufzeichnungssystem unterscheidet.

9. Vorrichtung (400) nach Anspruch 8, **dadurch gekennzeichnet, dass** das zweite Abbildungs- und/oder Bildaufzeichnungssystem ausgestaltet ist Bilder mit einer höheren Auflösung als das erste Abbildungs-und/oder Bildaufzeichnungssystem zu erfassen.

10. Vorrichtung (400) nach einem der Ansprüche 1 bis 9, **dadurch gekennzeichnet, dass** die computerausführbaren Anweisungen, wenn sie von dem einen oder den mehreren Prozessoren (410) ausgeführt werden, des Weiteren bewirken, dass die ein oder mehreren erfassten ersten Bilder (100; 210) vorbearbeitet werden, wobei die Vorbearbeitung ein Interpolieren der ein oder mehreren erfassten ersten Bilder (100; 210) auf die zweite Auflösung umfasst und das neuronale Netz (200; 430) auf die ein oder mehreren interpolierten ersten Bilder (100; 210) angewendet wird, oder
das neuronale Netz (200; 430) auf die ein oder mehreren erfassten ersten Bilder (100; 210) angewendet wird.

11. System 450 zur Skalierung von Bildern, umfassend:
ein oder mehrere Vorrichtungen (400) nach einem der Ansprüche 1 bis 10; und
das Mikroskop, wobei das Mikroskop ausgestaltet ist die ein oder mehreren ersten Bilder (100; 210) zu erfassen.

## Claims

1. Device (400) for scaling images, comprising:
one or more processors (410);
one or more computer-readable storage media (420) on which computer-executable instructions are stored, which, when executed by the one or more processors (410), lead to:
setting a first resolution, wherein setting the first resolution comprises setting a binning and/or selecting a subset of pixels of a microscope for capturing the one or more first images (100; 210);
adjusting the microscope based on the first resolution, wherein adjusting the microscope comprises adjusting at least one of the following: a numerical aperture, NA, of an optical system of the microscope, an exposure time, and a light intensity of a light source of the microscope;
capturing one or more first images (100; 210) by means of the microscope, wherein the one or more captured first images (100; 210) comprise the first resolution; and
applying a neural network (200; 430) to the one or more captured first images (100; 210) to generate one or more corresponding second images (130; 220), wherein the one or more second images (130; 220) comprise a second resolution, wherein the first resolution and the second resolution differ, wherein the one or more captured first images (100; 210) have a lower resolution than the one or more second images (130; 220).

2. Device (400) according to claim 1, **characterized in that**, by reducing the first resolution, the microscope is configured
- to reduce an exposure time for capturing the one or more first images (100; 210) by means of binning and/or a selection of a subset of pixels,
- to reduce a light intensity of a light source of the microscope by means of binning,
- to increase a transmission rate of the one or more first images (100; 210) by means of binning and/or a selection of a subset of pixels,
- to increase a frame rate for capturing the one or more first images (100; 210) by means of binning and/or a selection of a subset of pixels,
- to increase a maximum number of storable images by means of binning and/or a selection of a subset of pixels,
- to increase a recording speed for capturing the one or more first images (100; 210) by means of binning and/or a selection of a subset of pixels, and/or
- to store a larger number of the one or more captured first images (100; 210) by means of binning and/or a selection of a subset of pixels.

3. Device (400) according to any one of claims 1 and 2, **characterized in that** the one or more captured first images (100; 210) are stored and the neural network (200; 430) is applied to the one or more stored first images (100; 210).

4. Device (400) according to claim 3, **characterized in that** the first resolution of the one or more captured first images (100; 210) is reduced before storing.

5. Device (400) according to any one of claims 1 to 4, **characterized in that** the microscope comprises a microscope with a camera, a video camera, a microscope system, a microscope with a point scanner.

6. Device (400) according to any one of claims 1 to 5, **characterized in that** the one or more processors (410) comprise computing accelerators, such as graphical processing units, GPUs, or field-programmable gated arrays, FPGAs, tensor processing units, TPUs, application-specific integrated circuits, ASICs, specialized in machine learning, ML, and/or deep learning, DL, or at least one central processing unit, CPU.

7. Device (400) according to any one of claims 1 to 6, **characterized in that** the neural network (200; 430) has been trained in a context with the one or more first images (100; 210) and the one or more second images contain image information that has been generated semantically correctly from the neural network (200; 430).

8. Device (400) according to any one of claims 1 to 7, **characterized in that** the neural network (200; 430) has been trained on image pairs, wherein input images of the image pairs have been captured with a first imaging and/or image recording system (460) and target output images of the image pairs, corresponding to the input images, have been captured with a second imaging and/or image recording system (460), wherein the first imaging and/or image recording system differs from the second imaging and/or image recording system.

9. Device (400) according to claim 8, **characterized in that** the second imaging and/or image recording system is configured to capture images with a higher resolution than the first imaging and/or image recording system.

10. Device (400) according to any one of claims 1 to 9, **characterized in that** the computer-executable instructions, when executed by the one or more processors (410), further lead to the one or more captured first images (100; 210) being pre-processed, wherein the preprocessing comprises interpolating the one or more captured first images (100; 210) to the second resolution and applying the neural network (200; 430) to the one or more interpolated first images (100; 210), or
applying the neural network (200; 430) to the one or more captured first images (100; 210).

11. System 450 for scaling images, comprising:
one or more devices (400) according to any one of claims 1 to 10; and
the microscope, wherein the microscope is configured to capture the one or more first images (100; 210).

## Revendications

1. Dispositif (400) de mise à l'échelle d'images comprenant :
un ou plusieurs processeurs (410) ;
un ou plusieurs supports de stockage (420) lisibles par ordinateur, sur lesquels sont stockées des instructions exécutables par ordinateur qui, lorsqu'elles sont exécutées par lesdits un ou plusieurs processeurs (410), entraînent
le réglage d'une première résolution, dans lequel le réglage de la première résolution comprend un réglage d'un binning et/ou une sélection d'un sous-ensemble de pixels d'un microscope pour la capture d'une ou de plusieurs premières images (100 ; 210) ;
le microscope est réglé en fonction de la première résolution, dans lequel le réglage du microscope comprend un réglage d'au moins l'un des éléments suivants : une ouverture numérique, NA, un système optique du microscope, un temps d'exposition et une intensité lumineuse d'une source lumineuse du microscope ;
une ou plusieurs premières images (100 ; 210) sont capturées en utilisant le microscope, dans lequel lesdites une ou plusieurs premières images (100 ; 210) capturées comprennent la première résolution ; et un réseau neuronal (200 ; 430) est appliqué auxdites une ou plusieurs premières images (100 ; 210) capturées pour générer une ou plusieurs secondes images (130 ; 220) correspondantes, dans lequel
lesdites une ou plusieurs secondes images (130 ; 220) comprennent une seconde résolution, dans lequel la première résolution et la seconde résolution se distinguent, dans lequel lesdites une ou plusieurs premières images (100 ; 210) capturées présentent une résolution inférieure à celle desdites une ou plusieurs secondes images (130 ; 220).

2. Dispositif (400) selon la revendication 1, **caractérisé en ce que** le microscope est conçu par une diminution de la première résolution
- afin de réduire, par binning et/ou sélection d'un sous-ensemble de pixels, une durée d'exposition pour la capture des une ou plusieurs premières images (100 ; 210),
- afin de réduire, par binning, une intensité lumineuse d'une source lumineuse du microscope, d'augmenter, par binning et/ou une sélection d'un sous-ensemble de pixels, un taux de transmission des une ou plusieurs premières images (100 ; 210),
- afin d'augmenter, par binning et/ou une sélection d'un sous-ensemble de pixels, une fréquence d'images pour capturer les une ou plusieurs premières images (100 ; 210), d'augmenter, par binning et/ou une sélection d'un sous-ensemble de pixels, un nombre maximal d'images mémorisables,
- afin d'augmenter, par binning et/ou une sélection d'un sous-ensemble de pixels, une vitesse d'acquisition pour capturer les une ou plusieurs premières images (100 ; 210), et/ou
- afin de mémoriser, par binning et/ou une sélection d'un sous-ensemble de pixels, un nombre plus important des une ou plusieurs premières images (100 ; 210) capturées.

3. Dispositif (400) selon l'une quelconque des revendications 1 et 2, **caractérisé en ce que** les une ou plusieurs premières images (100 ; 210) capturées sont enregistrées et le réseau neuronal (200 ; 430) est appliqué sur les une ou plusieurs premières images (100 ; 210) enregistrées.

4. Dispositif (400) selon la revendication 3, **caractérisé en ce que** la première résolution des une ou plusieurs premières images (100 ; 210) capturées est réduite avant l'enregistrement.

5. Dispositif (400) selon l'une quelconque des revendications 1 à 4, **caractérisé en ce que** le microscope comprend un microscope avec une caméra, une caméra vidéo, un système de microscope, un microscope avec un scanner de points.

6. Dispositif (400) selon l'une quelconque des revendications 1 à 5, **caractérisé en ce que** les un ou plusieurs processeurs (410) comprennent des accélérateurs de calcul, tels que les unités de traitement graphique, GPU, ou antennes synchronisées programmables sur site, FPGA, unités de traitement de tenseur, TPU, circuits intégrés spécifiques à l'application spécialisés en apprentissage sur machine, ML, et/ou apprentissage profond, DL, ASIC ou au moins une unité centrale de traitement, CPU.

7. Dispositif (400) selon l'une quelconque des revendications 1 à 6, **caractérisé en ce que** le réseau neuronal (200 ; 430) a été formé dans un contexte avec les une ou plusieurs premières images (100 ; 210) et des informations d'image sont contenues dans les une ou plusieurs secondes images, lesquelles informations ont été générées sémantiquement correctement à partir du réseau neuronal (200 ; 430).

8. Dispositif (400) selon l'une quelconque des revendications 1 à 7, **caractérisé en ce que** le réseau neuronal (200 ; 430) a été formé au niveau de paires d'images, dans lequel des images d'entrée des paires d'images ont été capturées avec un premier système d'imagerie et/ou d'enregistrement d'images (460) et des images de sortie de consigne correspondant aux images d'entrée des paires d'images ont été capturées avec un second système d'imagerie et/ou d'enregistrement d'images (460), dans lequel le premier système d'imagerie et/ou d'enregistrement d'images se distingue du second système d'imagerie et/ou d'enregistrement d'images.

9. Dispositif (400) selon la revendication 8, **caractérisé en ce que** le second système d'imagerie et/ou d'enregistrement d'images est conçu afin de capturer des images avec une résolution supérieure à celle du premier système d'imagerie et/ou d'enregistrement d'images.

10. Dispositif (400) selon l'une quelconque des revendications 1 à 9, **caractérisé en ce que** les instructions exécutables par ordinateur lorsqu'elles sont exécutées par l'un ou les plusieurs processeurs (410) entraînent en outre le prétraitement des une ou plusieurs premières images (100 ; 210) capturées, dans lequel le prétraitement comprend une interpolation des une ou plusieurs premières images (100 ; 210) capturées sur la seconde résolution et le réseau neuronal (200 ; 430) est appliqué sur les une ou plusieurs premières images (100 ; 210) interpolées, ou le réseau neuronal (200 ; 430) est appliqué sur les une ou plusieurs premières images (100 ; 210) capturées.

11. Système (450) de mise à l'échelle d'images, comprenant :
un ou plusieurs dispositifs (400) selon l'une quelconque des revendications 1 à 10 ; et le microscope, dans lequel le microscope est conçu de façon à capturer lesdites une ou plusieurs premières images (100 ; 210).
